# FASCICULE DE BREVET EUROPEEN

(11) **EP 0 802 403 B1**
(45) Date de publication et mention de la délivrance du brevet: **19.09.2001**
(21) Numéro de dépôt: 97400587.8
(22) Date de dépôt: 17.03.1997
(51) Int. Cl.: G01L 3/22, G01L 5/28

(54) **Dispositif pour la mesure d'un couple moteur**
Vorrichtung zur Messung eines Motordrehmomentes
Device for measuring an engine torque

(30) Priorité: 16.04.1996 FR 9604714
(43) Date de publication de la demande: 22.10.1997
(73) Titulaire: Borghi Saveri France, 78190 Trappes (FR)
(72) Inventeur: Drecq, Daniel, 78610 Saint Leger en Yvelines (FR)
(74) Mandataire: Peuscet, Jacques

(56) Documents cités:
- DE-A- 4 120 243
- US-A- 5 149 998
- US-A- 5 452 605
- PATENT ABSTRACTS OF JAPAN vol. 95, no. 10, 30 Novembre 1995 & JP 07 167721 A (AMANO KOGYO GIJUTSU KENKYUSHO), 4 Juillet 1995,
- PATENT ABSTRACTS OF JAPAN vol. 007, no. 198 (P-220), 2 Septembre 1983 & JP 58 097635 A (SEIICHI AWANO), 10 Juin 1983,

## Description

La présente invention concerne un dispositif pour la mesure du couple d'un moteur.

On sait que, pour mesurer le couple en charge d'un moteur, il est connu de monter sur un banc d'essai le moteur, dont on veut mesurer le couple, et d'accoupler ce dernier avec un dispositif de mesure de couple comportant une machine-frein consommatrice d'énergie. De façon connue, la machine-frein peut être soit un frein à courants de Foucault, soit une machine électrique tournante fonctionnant en dynamo ou en alternateur.

Dans l'état de l'art antérieur, un dispositif de mesure de couple associé à une machine-frein comporte un rotor monté sur arbre entraîné directement par le moteur, dont le couple est à mesurer. Cet arbre est monté libre en rotation, à l'aide de roulements à billes, dans un stator. Ce stator est lui-même monté oscillant sur le bâti du banc de test à l'aide de roulements à billes, mais on l'empêche de tourner par un capteur de couple approprié, qui mesure le couple de freinage du rotor par le couple de réaction correspondant exercé sur le bâti par le stator lorsque ce dernier est en équilibre.

Dans le cas où la machine-frein est un frein à courants de Foucault, le rotor est un disque conducteur qui tourne dans un champ magnétique, de préférence alternatif, ce qui provoque l'apparition des courants de Foucault à l'intérieur du disque conducteur ; ces courants se déplacent avec le rotor dans le champ magnétique et provoquent en retour un couple de freinage du rotor, ce qui est l'effet recherché ; ils dissipent par effet Joule une énergie importante. L'élément générateur de champ magnétique est une bobine alimentée électriquement, de préférence par un courant alternatif, qui est solidaire du stator de la machine-frein. La chaleur dissipée par effet Joule est évacuée par un jeu de labyrinthes de refroidissement, eux aussi solidaires du stator, qui sont alimentés en liquide de refroidissement au moyen de tubulures appropriées.

Dans le cas où la machine-frein est une machine électrique tournante, on peut utiliser un moteur à courant continu ou un moteur asynchrone fonctionnant en générateur de courant ; le stator constitue l'induit et fournit du courant électrique que l'on peut renvoyer au réseau ; le stator est monté oscillant sur le bâti du banc comme dans le cas du frein à courants de Foucault.

Lorsque des puissances de freinage importantes sont requises, on peut assembler sur un même arbre respectivement deux ou trois machines-freins mono-rotors pour obtenir respectivement un dispositif de mesure de couple bi-rotor ou tri-rotor. On peut également réaliser un dispositif de mesure de couple quadri-rotor par l'accouplement de deux machines-freins bi-rotors à l'aide d'un accouplement à haute rigidité torsionnelle. Cependant, il n'est pas possible de réaliser un tel dispositif de mesure de couple quadri-rotor sur un même arbre pour des hauts régimes de rotation car, du fait de l'association de plusieurs masses mobiles et d'éléments roulants en série, il en résulte une rigidité globale résultante faible pour une masse globale importante, ce qui entraîne un premier régime critique de vibration en flexion très inférieur à celui requis par l'utilisation à laquelle est destiné le dispositif de mesure de couple, et le rend donc impropre à l'usage auquel il est destiné. Pour la mesure de valeurs de couple élevées à des vitesses de rotation élevées, par exemple pour les moteurs d'automobiles de compétition, il se pose donc un problème qui n'est pas résolu de façon simple et économique.

Par ailleurs, dans tous les dispositifs de mesure de couple selon l'état de l'art antérieur ci-dessus décrit, le couple de résistance au roulement des roulements à billes placés entre le stator oscillant et le bâti vient en déduction du couple mesuré entre ledit stator et le bâti. Cela présente l'inconvénient de fausser la mesure du couple et d'empêcher d'augmenter le couple de serrage dudit roulement, qui seul permettrait d'augmenter la rigidité de cette liaison.

La présente invention a pour but de proposer un dispositif de mesure de couple qui remédie aux inconvénients ci-dessus énoncés. L'invention a donc pour objet un dispositif de mesure du couple développé par un moteur, ce dispositif comprenant, sur un socle fixe, un arbre solidaire d'au moins un rotor d'une machine-frein dont le stator est porté par ledit socle, caractérisé par le fait que ledit stator est fixe et solidaire dudit socle et qu'un élément de mesure de couple est disposé entre ledit arbre et son accouplement au moteur dont le couple est à mesurer.

Dans une première variante, la machine-frein utilisée est un moteur électrique à courant continu ou un moteur asynchrone ; dans une deuxième variante, la machine-frein utilisée est un frein à courants de Foucault dont le rotor est conducteur et est disposé dans un stator constitué par un carter comportant au moins un élément générateur de champ magnétique, dont le champ est traversé par le rotor conducteur pour y générer des courants de Foucault, ledit carter étant porté par ledit socle et supportant ledit arbre.

Dans le cas où l'on utilise un frein à courants de Foucault, le carter peut avantageusement comporter au moins un élément de refroidissement, constitué, par exemple, de labyrinthes alimentés par un fluide de refroidissement. L'élément générateur de champ magnétique peut être un bobinage alimenté par un courant électrique et disposé à la périphérie du rotor, de façon à générer un champ axial par rapport au rotor. Le courant électrique d'alimentation de l'élément générateur de champ magnétique est avantageusement un courant alternatif ou un courant haché.

L'élément de mesure de couple du dispositif selon l'invention est, de préférence, un couplemètre.

Le dispositif selon l'invention peut comporter, en outre, un réducteur de vitesse inséré entre l'arbre et l'élément de mesure de couple.

Enfin, le dispositif selon l'invention peut comporter un rotor unique, ou, alternativement, de deux à quatre rotors.

Pour mieux faire comprendre l'objet de la présente invention, on va maintenant en décrire, à titre d'exemple purement illustratif et non limitatif, un mode de réalisation représenté sur le dessin annexé.

Sur ce dessin :
- la figure 1 représente schématiquement une coupe axiale d'un dispositif de mesure de couple comportant un frein à courants de Foucault selon l'état de la technique ;
- la figure 2 est un schéma montrant les rigidités d'appui des divers éléments du dispositif de la figure 1 ;
- la figure 3 est une vue en élévation du dispositif de la figure 1, selon III-III de la figure 1 ;
- la figure 4 représente schématiquement une coupe axiale d'un dispositif selon la présente invention comportant une machine-frein à courants de Foucault.

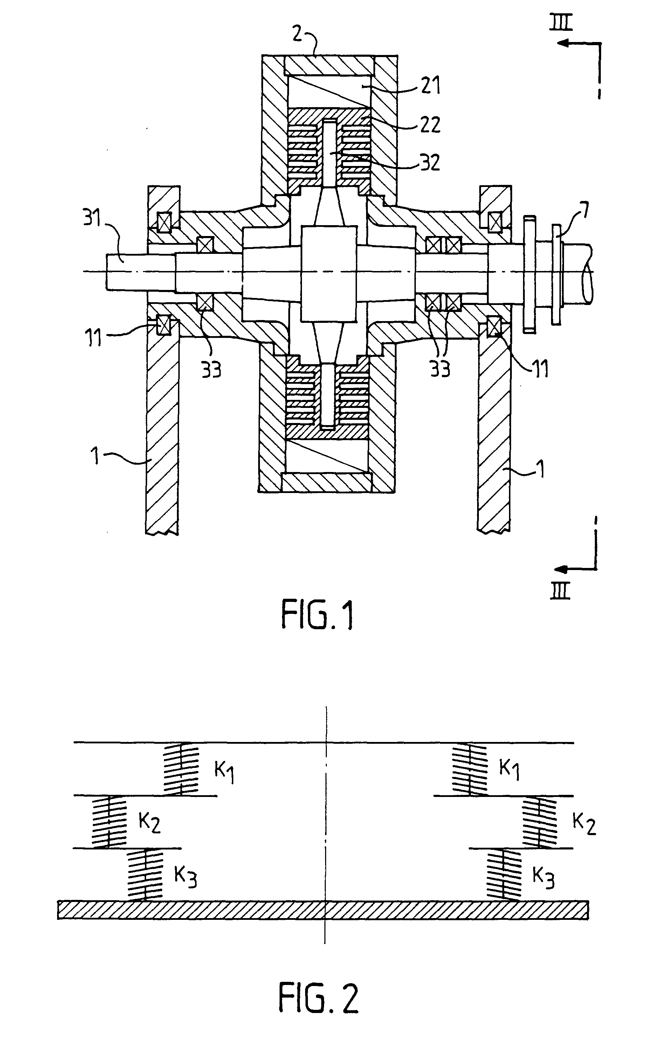

En se référant aux figures 1 à 3, on va décrire, à titre de référence, un dispositif de mesure de couple comportant un frein à courants de Foucault selon l'état de l'art antérieur.

Dans un tel dispositif, un socle S supporte une cage fixe 1, dans laquelle est inséré un carter oscillant 2 ayant une forme cylindrique de base circulaire. Le carter oscillant 2 est monté libre en rotation dans la cage fixe 1 par l'intermédiaire de roulements 11, mais il est retenu dans sa rotation par un capteur d'effort 4 interposé entre un bras radial 2a solidaire du carter 2 et une attache la solidaire du socle S. En multipliant l'effort, mesuré par le capteur 4, par le bras de levier correspondant au diamètre du carter 2 augmentée de la longueur du bras 2a, on obtient la valeur du couple agissant sur le carter 2.

Un bobinage circulaire d'induction 21 est porté par le carter 2, à sa périphérie, pour générer un champ magnétique radial. Des labyrinthes de refroidissement 22 circulaires sont portés par les deux faces circulaires du carter 2 et sont disposés entre le bobinage 21 et l'axe du carter 2 ; ils sont alimentés par une entrée 5 de liquide de refroidissement, ce dernier ressortant par la sortie 6. Le liquide de refroidissement est généralement de l'eau.

Un arbre 31 est solidaire d'un rotor électriquement conducteur 32 ; il tourillonne par rapport au carter oscillant 2 par l'intermédiaire des roulements 33. Le rotor 32 tourne entre les labyrinthes 22 qui l'enserrent avec un faible jeu.

Lorsque l'on désire mesurer le couple d'un moteur thermique (non représenté) pour un régime donné, le moteur est relié par l'intermédiaire d'un plateau d'accouplement 7 à l'arbre 31. Le moteur est alors mis en marche avec une alimentation donnée et un courant d'excitation dans le bobinage 2 induit dans le rotor conducteur 32 des courants de Foucault sensiblement proportionnels au courant d'excitation ; ces courants de Foucault, se déplacent dans un champ en raison de la rotation du rotor, génèrent une réaction de freinage sur le rotor 32. Le rotor 32 étant entraîné, il se produit sur le carter 2 un couple de réaction de valeur égale au couple de freinage.

Une électronique de commande (non représentée) régule alors le courant dans la bobine d'induction de façon que la vitesse de rotation, telle que mesurée par un compte-tours (non représenté) se stabilise à une valeur égale à celle pour laquelle on désire mesurer la valeur du couple du moteur. Plus précisément, l'électronique de commande augmente le courant d'excitation lorsque le régime est trop élevé, ce qui augmente le freinage et tend à ralentir le rotor, et elle diminue le courant d'excitation dans le cas contraire, ce qui diminue le freinage et permet au régime moteur d'augmenter. Lorsque le régime de rotation est stabilisé à la valeur voulue, la valeur du couple est obtenue en multipliant la valeur de l'effort lu sur le capteur 4 par la distance qui le sépare de l'axe de rotation.

Si l'on désire mesurer le régime moteur pour un couple donné, l'électronique de commande régule le courant d'excitation dans le bobinage 2, de façon que le couple mesuré, comme produit de l'effort mesuré par le capteur 4 par sa distance à l'axe de rotation, soit égal à celui pour lequel on désire mesurer la valeur du régime. Plus précisément, l'électronique de commande augmente le courant d'excitation lorsque le couple est trop faible, ce qui augmente le freinage et donc le couple, et elle diminue le courant d'excitation dans le cas contraire, ce qui diminue le freinage et donc le couple. Lorsque le couple mesuré est stabilisé à la valeur désirée, la valeur du régime moteur est lue sur le compte-tours.

Ce dispositif de mesure de couple présente l'inconvénient que, comme représenté sur la figure 2, les rigidités k₁ des roulements 33, k₂ des roulements 11 et k₃ de la cage fixe 1 sont en série, ce qui signifie que la rigidité globale résultante est l'inverse de la somme des inverses des rigidités k₁, k₂ et k₃ ; il s'en déduit que la rigidité globale résultante du système est inférieure à la plus faible de ces rigidités k₁, k₂ et k₃. Cette faible rigidité résultante, associée à des masses suspendues importantes comme celle du carter 2 et de l'arbre 31 et du rotor 32, entraîne l'existence d'un premier régime critique de vibration de valeur faible. Ce premier régime critique peut être inférieur au régime de fonctionnement auquel on souhaiterait utiliser le dispositif : c'est notamment le cas lorsque l'on désire tester des moteurs thermiques destinés à des automobiles de compétition, auquel cas le dispositif devient inapte à l'usage pour lequel il a été conçu.

En outre, le couple résistant des roulements 11 vient en déduction du couple mesuré, et ce couple résistant peut n'être pas du tout négligeable si ces roulements ont été montés avec une précontrainte axiale importante pour en augmenter la rigidité : d'où il résulte une mesure erronée.

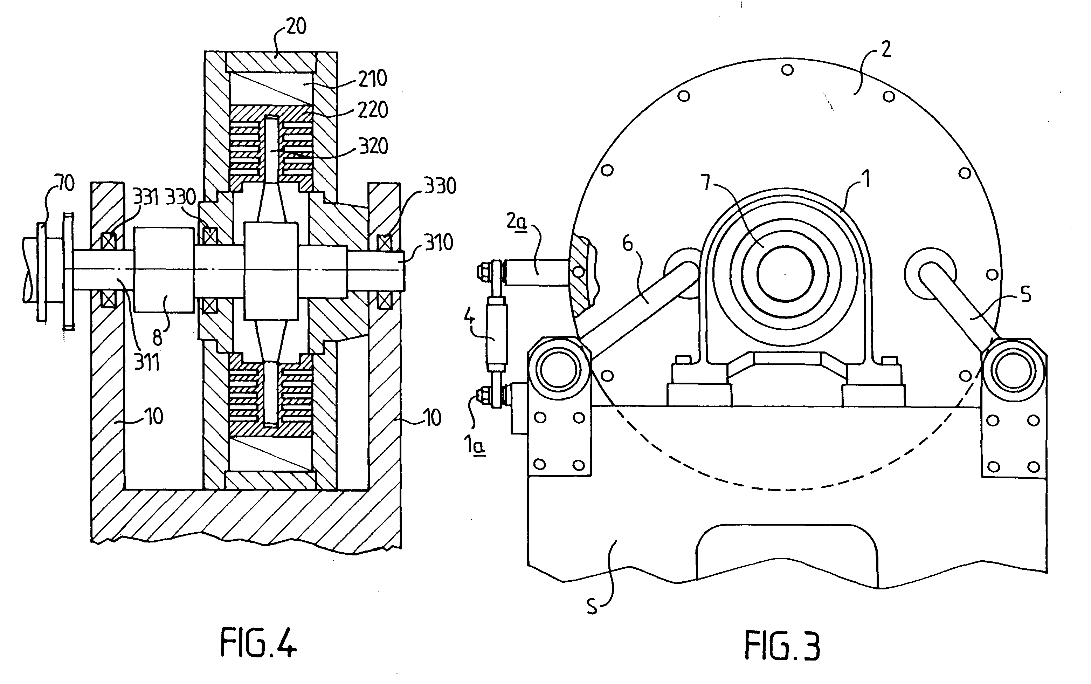

En se référant maintenant à la figure 4, on va décrire un mode de réalisation selon la présente invention. La plupart des éléments de cette réalisation sont les mêmes que pour le dispositif de la figure 1 : il leur a été donné un numéro de référence qui correspond à celui utilisé pour les figures 1 et 3 suivi d'un zéro, ce qui permet d'éviter de reprendre une description détaillée.

Dans ce dispositif, un socle fixe (non représenté) supporte une cage fixe 10 à laquelle est assujetti un carter fixe 20. Un bobinage circulaire 210 est solidaire du carter fixe 20 ainsi que des labyrinthes de refroidissement 220 également circulaires. Un arbre 310 solidaire d'un rotor électriquement conducteur 320 est disposé dans le carter fixe 20 et tourillonne dans l'ensemble fixe par l'intermédiaire de roulements 330.

Un couplemètre 8 est mis en place en bout de l'arbre 310. Dans ce mode de réalisation, le couplemètre 8 est un couplemètre commercialisé par la société "VIBRO METER", sous la référence "TORQUE MASTER TM". Ce couplemètre 8 est relié, par son autre extrémité, à un arbre intermédiaire 311 qui tourillonne dans la cage fixe 10 avec interposition d'un roulement 331. L'arbre 311 porte en bout un plateau d'accouplement 70 qui permet de le relier à l'arbre d'un moteur à étudier.

Lorsque l'on désire mesurer le couple d'un moteur thermique pour un régime donné, le moteur étant relié par l'intermédiaire du plateau d'accouplement 70 au dispositif ci-dessus décrit, on met en marche le moteur avec une alimentation donnée ; un courant d'excitation dans le bobinage 210 induit dans le rotor 320 des courants de Foucault sensiblement proportionnels au courant d'excitation, et ces courants de Foucault freinent le rotor 320 comme précédemment expliqué. Une électronique de commande (non représentée) régule alors le courant dans le bobinage 210 de façon que le régime de rotation soit celui pour lequel on désire mesurer la valeur du couple moteur.

Lorsque le régime moteur est stabilisé à la valeur voulue, la valeur est lue sur le couplemètre 8.

Si l'on désire mesurer le régime du moteur pour un couple donné, l'électronique de commande régule le courant d'excitation dans le bobinage 210, de façon que le couple lu directement sur le couplemètre 8 soit égal à celui pour lequel on désire mesurer la valeur du régime.

Le dispositif de mesure de couple ci-dessus décrit permet d'obtenir les mêmes fonctionnalités que le dispositif de l'état de l'art antérieur correspondant aux figures 1 à 3.

Toutefois, dans le dispositif selon la présente invention, les masses mobiles sont considérablement réduites puisque l'intégralité du carter 20, comprenant entre autres, le bobinage 210 et les labyrinthes de refroidissement 220, est maintenant fixe par rapport à la cage 10, au lieu d'être mobile comme l'état de la technique.

De plus, les roulements à billes d'oscillation 11 situés entre le carter 2 et le bâti 1 sont supprimés, ce qui augmente d'autant la rigidité globale du dispositif, puisque la rigidité k₂ représentée sur la figure 2 disparaît.

En conséquence, le premier régime critique en vibration de flexion est considérablement relevé, ce qui entraîne, pour le dispositif selon la présente invention, la possibilité d'une utilisation à des régimes bien plus élevés que ceux qui étaient possibles pour les dispositifs de l'état de la technique.

En outre, la mesure de couple étant maintenant réalisée en amont des roulements 330, le couple résistant de ces derniers n'est donc plus mesuré par le couplemètre 8 et la précision de la mesure s'en trouve donc considérablement améliorée.

## Revendications

1. Dispositif de mesure du couple développé par un moteur, ce dispositif comprenant, sur un socle fixe, un arbre (310) solidaire d'au moins un rotor (320) d'une machine-frein dont le stator est porté par ledit socle, **caractérisé par** le fait que ledit stator (20) est fixe et solidaire dudit socle et qu'un élément de mesure de couple (8) est disposé entre ledit arbre (310) et son accouplement (70) au moteur dont le couple est à mesurer.

2. Dispositif selon la revendication 1, **caractérisé par** le fait que la machine-frein est un moteur à courant continu ou un moteur asynchrone.

3. Dispositif selon la revendication 1, **caractérisé par** le fait: que la machine-frein est un frein à courants de Foucault dont le rotor (320) est conducteur et est disposé dans un stator constitué par un carter (20) comportant au moins un élément générateur de champ magnétique (210), dont le champ est traversé par le rotor conducteur pour y générer des courants de Foucault, ledit carter étant porté par ledit socle et supportant ledit arbre.

4. Dispositif selon la revendication 3, **caractérisé par** le fait que le carter (20) comporte au moins un élément de refroidissement (220).

5. Dispositif selon la revendication 4, **caractérisé par** le fait que l'élément de refroidissement est constitué de labyrinthes (220) alimentés par un fluide de refroidissement.

6. Dispositif selon l'une des revendications 3 à 5, **caractérisé par** le fait que l'élément générateur de champ magnétique est un bobinage (210) alimenté par un courant électrique et disposé à la périphérie du rotor (320), de façon à générer un champ axial par rapport au rotor.

7. Dispositif selon la revendication 6, **caractérisé par** le fait que le bobinage (210) est alimenté par un courant électrique alternatif ou haché.

8. Dispositif selon l'une des revendications 1 à 7, **caractérisé par** le fait que l'élément de mesure de couple est un couplemètre (8).

9. Dispositif selon l'une des revendications 1 à 8, **caractérisé par** le fait qu'il comporte un réducteur de vitesse inséré entre l'arbre (310) et l'élément de mesure de couple (8).

10. Dispositif selon l'une des revendications 1 à 9, **caractérisé par** le fait qu'il comporte un rotor unique.

11. Dispositif selon l'une des revendications 1 à 9, **caractérisé par** le fait qu'il comporte deux, trois ou quatre rotors.

## Claims

1. Device for measuring the torque developed by an engine, this device comprising, on a fixed base, a shaft (310) secured to at least one rotor (320) of a brake, the stator of which is carried by the said base, **characterized in that** the said stator (20) is stationary and secured to the said base and in that a torque-measuring element (8) is arranged between the said shaft (310) and its coupling (70) to the engine whose torque is to be measured.

2. Device according to Claim 1, **characterized in that** the brake is a DC motor or an asynchronous motor.

3. Device according to Claim 1, **characterized in that** the brake is an eddy current brake, the rotor (320) of which conducts and is arranged inside a stator consisting of a casing (20) containing at least one magnetic-field-generating element (210), the field of which has the conducting rotor passing through it in order to generate eddy currents therein, the said casing being carried by the said base and supporting the said shaft.

4. Device according to Claim 3, **characterized in that** the casing (20) contains at least one cooling element (220).

5. Device according to Claim 4, **characterized in that** the cooling element consists of labyrinths (220) supplied with cooling fluid.

6. Device according to one of Claims 3 to 5, **characterized in that** the magnetic-field-generating element is a winding (210) supplied with electric current and arranged at the periphery of the rotor (320) so as to generate a field which is axial with respect to the rotor.

7. Device according to Claim 6, **characterized in that** the winding (210) is supplied with AC or chopped electric current.

8. Device according to one of Claims 1 to 7, **characterized in that** the torque-measuring element is a torque meter (8).

9. Device according to one of Claims 1 to 8, **characterized in that** it comprises a speed reducer inserted between the shaft (310) and the torque-measuring element (8).

10. Device according to one of Claims 1 to 9, **characterized in that** it has a single rotor.

11. Device according to one of Claims 1 to 9, **characterized in that** it has two, three or four rotors.

## Patentansprüche

1. Vorrichtung zur Messung des von einem Motor entwickelten Drehmoments, wobei die Vorrichtung auf einem festen Sockel eine Welle (310) umfaßt, die mit wenigstens einem Rotor (320) einer Bremseinrichtung verbunden ist, deren Stator von dem Sockel getragen wird, **dadurch gekennzeichnet, dass** der Stator (20) fest mit dem Sockel verbunden ist, und dass ein Bauteil zur Messung des Drehmoments (8) zwischen der Welle (310) und ihrer Kupplung (70) zu dem Motor, dessen Drehmoment gemessen werden soll, angeordnet ist.

2. Vorrichtung gemäß Anspruch 1, **dadurch gekennzeichnet, dass** die Bremseinrichtung ein Gleichstrommotor oder ein Asynchronmotor ist.

3. Vorrichtung gemäß Anspruch 1, **dadurch gekennzeichnet, dass** die Bremseinrichtung eine Wirbelstrombremse ist, deren Rotor (320) als Leiter ausgebildet und in einem Stator angeordnet ist, der aus einem Gehäuse (20) besteht, welches wenigstens ein Bauteil zur Erzeugung eines Magnetfeldes (210) aufweist, dessen Feld von dem leitenden Rotor durchquert wird, um in ihm Wirbelströme zu erzeugen, wobei das Gehäuse durch den Sockel getragen wird und dabei die Welle stützt.

4. Vorrichtung gemäß Anspruch 3, **dadurch gekennzeichnet, dass** das Gehäuse (20) wenigstens ein Kühlelement (220) aufweist.

5. Vorrichtung gemäß Anspruch 4, **dadurch gekennzeichnet, dass** das Kühlelement aus einem Kühlfluid beschickten Labyrinth (220) besteht.

6. Vorrichtung gemäß einem der Ansprüche 3 bis 5, **dadurch gekennzeichnet, dass** das Bauteil zur Erzeugung eines Magnetfeldes eine mit elektrischem Strom versorgte Spule (210) ist, die am Umfang des Rotors (320) so angeordnet ist, dass bezüglich des Rotors ein axiales Feld erzeugt wird.

7. Vorrichtung gemäß Anspruch 6, **dadurch gekennzeichnet, dass** die Spule (210) mit einem elektrischen Wechselstrom oder Sägezahnstrom versorgt wird.

8. Vorrichtung gemäß einem der Ansprüche 1 bis 7, **dadurch gekennzeichnet, dass** das Bauteil zur Messung des Drehmoments ein Drehmomentmesser (8) ist.

9. Vorrichtung gemäß einem der Ansprüche 1 bis 8, **dadurch gekennzeichnet, dass** sie einen Drehzahlminderer aufweist, der zwischen der Welle (310) und dem Bauteil zur Messung des Drehmoments (8) eingesetzt ist.

10. Vorrichtung gemäß einem der Ansprüche 1 bis 9, **dadurch gekennzeichnet, dass** sie einen einzigen Rotor aufweist.

11. Vorrichtung gemäß einem der Ansprüche 1 bis 9, **dadurch gekennzeichnet, dass** sie zwei, drei oder vier Rotoren aufweist.
